# EUROPEAN PATENT SPECIFICATION

(11) **EP 3 217 122 B1**
(45) Date of publication and mention of the grant of the patent: **20.05.2020**
(21) Application number: 17154181.6
(22) Date of filing: 01.02.2017
(51) Int. Cl.: F25B 49/02, F25B 13/00, F25B 47/02

(54) **OUTDOOR UNIT FOR AIR CONDITIONER**
AUSSENEINHEIT FÜR EINE KLIMAANLAGE
UNITÉ D'EXTÉRIEUR POUR CLIMATISEUR D'AIR

(30) Priority: 09.03.2016 JP 2016046071
(43) Date of publication of application: 13.09.2017
(73) Proprietor: Panasonic Intellectual Property Management Co., Ltd., Osaka-shi, Osaka 540-6207 (JP)
(72) Inventor: MASUDA, Tetsuya, OSAKA, 540-6207 (JP); MATSUI, Masaru, OSAKA, 540-6207 (JP); SUITO, Kazuaki, OSAKA, 540-6207 (JP)
(74) Representative: Eisenführ Speiser

(56) References cited:
- WO-A1-2015/076509
- US-A- 4 614 090
- US-A1- 2013 104 580

## Description

### BACKGROUND

### 1. Technical Field

The present disclosure relates to control of an air conditioner in a defrosting operation. The air conditioner includes both a non-electrically driven compressor driven by an engine and an electrically driven compressor driven by electric power.

### 2. Description of the Related Art

When a gas heat pump is operated under partial load conditions, the thermal efficiency of an engine drops, and the operation efficiency of the gas heat pump, which serves as an air conditioner, drops accordingly. To avoid this, a so-called hybrid outdoor unit, which includes both an electrically driven compressor and a non-electrically driven compressor, has been proposed. The electrically driven compressor has a displacement volume smaller than that of the non-electrically driven compressor, which is driven by the engine. The electrically driven compressor is mainly driven under partial load conditions, and the engine is mainly driven under high load conditions.

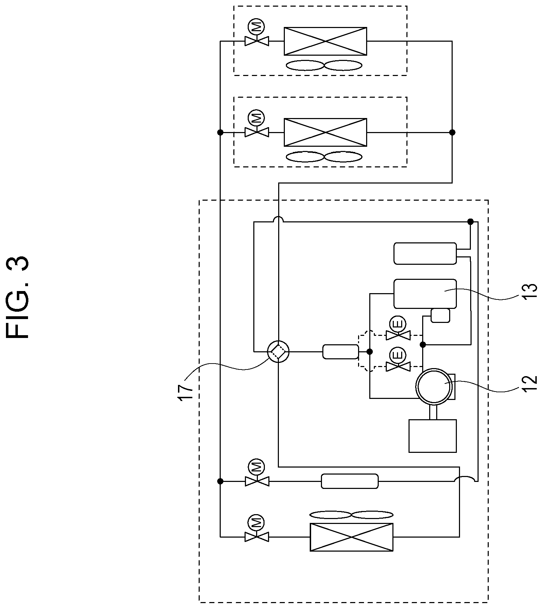

Fig. 3 is a block diagram illustrating the configuration according to Japanese Unexamined Patent Application Publication No. 2003-56931 (hereinafter referred to as Patent Document 1). A non-electrically driven compressor 12 and an electrically driven compressor 13 are connected in parallel in a refrigeration cycle. WO 2015/076509 A1 discloses an outdoor unit according to the preamble of claim 1.

In general, when an outdoor unit for an air conditioner performs a heating operation at a low outside air temperature, an air heat exchanger mounted in the outdoor unit becomes frosted. If the air heat exchanger is continuously operated in the frosted state, the heating capacity of the air conditioner decreases. Therefore, a defrosting operation, which is an operation for melting the frost, needs to be performed. In a typical defrosting operation, a compressor is temporarily stopped, and a four-way valve is switched to a state for a cooling operation so that a direction in which refrigerant flows in a refrigeration cycle is reversed. Then, the compressor is reactivated so that high-temperature refrigerant discharged from the compressor is directly transmitted to the air heat exchanger.

Similar to a common outdoor unit, the hybrid outdoor unit described in Patent Document 1 also performs a defrosting operation by temporarily stopping the engine, the non-electrically driven compressor 12, and the electrically driven compressor 13 and switching a four-way valve 17 to change the direction in which refrigerant flows.

The non-electrically driven compressor 12 may be stopped without stopping the engine by disengaging the clutch that transmits the rotation of the engine to the non-electrically driven compressor 12. However, in such a case, there is a risk that an abnormal increase in the rotational speed of the engine will occur immediately after the clutch is disengaged and the rotational load of the engine is eliminated. Therefore, to avoid exhaustion of the engine, the engine is generally stopped immediately before the defrosting operation.

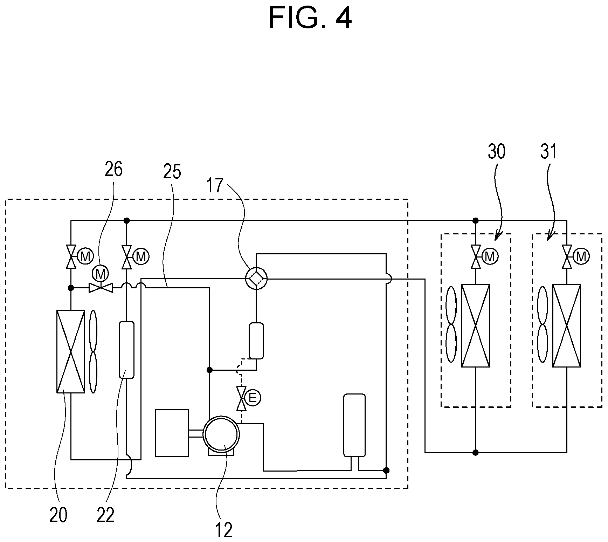

Japanese Unexamined Patent Application Publication No. 2005-274039 (hereinafter referred to as Patent Document 2) describes an example of a defrosting operation of an outdoor unit of a gas heat pump (GHP) including an engine and a non-electrically driven compressor driven by the engine (Fig. 4). Referring to Fig. 4, an outdoor heat exchanger 20 and a waste heat recovery device 22 are connected in parallel, and a gas bypass circuit 25 is provided to enable refrigerant discharged from the non-electrically driven compressor 12 to flow to an inlet of the outdoor heat exchanger 20.

A cooling water system for cooling the engine is mounted in the engine. The cooling water system is driven by a circulating pump. Cooling water circulates through an outer section of the engine and absorbs waste heat of the engine. The cooling water that has absorbed the waste heat of the engine and increased in temperature dissipates heat and is cooled in a radiator that transfers heat between the cooling water and air or in a waste heat recovery device 22 that transfers heat between the cooling water and the refrigerant. Then, the cooling water returns to the outer section of the engine.

The defrosting operation is performed while the four-way valve 17 is continuously in a switching state for the heating operation. Part of the discharged high-temperature refrigerant is supplied to the outdoor heat exchanger 20 to defrost the outdoor heat exchanger 20, and is liquefied. The remaining part of the refrigerant flows to indoor units 30 and 31 to heat their respective rooms, and is then evaporated and gasified in the waste heat recovery device 22. The liquid refrigerant that has left the outdoor heat exchanger 20 and the gas refrigerant that has left the waste heat recovery device 22 are combined together to become saturated vapor, which returns to the non-electrically driven compressor 12. The degree of superheat of the refrigerant that returns to the non-electrically driven compressor 12 is adjusted by adjusting the opening degree of a flow-regulating valve 26.

As described in Patent Document 2, in the outdoor unit of the gas heat pump (GHP) according to the related art, the defrosting operation can be performed by using the waste heat of the engine.

### SUMMARY

However, in the structure according to Patent Document 2, the gas refrigerant discharged from the non-electrically driven compressor 12 passes through the flow-regulating valve 26 disposed at an intermediate position of the gas bypass circuit 25. Therefore, there is a risk that the desired defrosting performance cannot be obtained. A common flow-regulating valve causes a large pressure drop when gas refrigerant passes therethrough, and the energy of the discharged refrigerant is reduced accordingly. Thus, the refrigerant that has defrosted the outdoor heat exchanger 20 and has been liquefied is significantly cooled, and superheat cannot be achieved even after the liquid refrigerant joins the gas refrigerant discharged from the waste heat recovery device 22.

Thus, the discharged gas refrigerant may lose energy when passing through the flow-regulating valve 26 and return to the non-electrically driven compressor 12 in a liquid-rich state. In such a case, the operational reliability of the non-electrically driven compressor 12 is reduced.

The hybrid outdoor unit described in Patent Document 1 also has a problem that the operational reliability of the electrically driven compressor 13 will be reduced if the non-electrically driven compressor 12 is activated first when the defrosting operation is started.

During the heating operation, the engine is operated and the surface temperature of the engine is increased to about 80°C. When the engine is stopped before starting the defrosting operation, the surface temperature gradually decreases. However, the rate at which the surface temperature decreases is low since the engine has a large thermal capacity. The engine, the non-electrically driven compressor 12, and the electrically driven compressor 13 are stopped for 30 seconds to 3 minutes before the defrosting operation is started. During this period, the engine surface temperature does not decrease by a large amount and is maintained higher than or equal to 70°C.

Since the non-electrically driven compressor 12 receives rotational driving force from the engine through a power transmission belt, the distance between the non-electrically driven compressor 12 and the engine is smaller than the distance between the electrically driven compressor 13 and the engine. Therefore, when the engine, the non-electrically driven compressor 12, and the electrically driven compressor 13 are stopped, the temperature in a pressure vessel that contains the non-electrically driven compressor 12 is maintained due to the heat of the engine, while the temperature in a pressure vessel that contains the electrically driven compressor 13 decreases due to the influence of the outside air temperature. This becomes significant when the outside air temperature is very low, for example, when the outside air temperature is lower than or equal to - 10°C.

Therefore, when the defrosting operation is started by activating the non-electrically driven compressor 12 first in an environment where the outside air temperature is very low, the electrically driven compressor 13 is stopped for a long time and the temperature in the pressure vessel that contains the electrically driven compressor 13 decreases due to the influence of the outside air temperature. Accordingly, the refrigerant discharged from the electrically driven compressor 13 is instantly cooled, condensed, and liquefied in the pressure vessel that contains the electrically driven compressor 13. Accordingly, refrigeration oil is discharged from the pressure vessel of the electrically driven compressor 13 together with the liquid refrigerant. Thus, there is a problem that, when the defrosting operation is started, the refrigeration oil will be depleted and the operational reliability of the electrically driven compressor 13 will be reduced.

One non-limiting and exemplary embodiment provides an outdoor unit for an air conditioner. The outdoor unit is a hybrid outdoor unit in which an electrically driven compressor and a non-electrically driven compressor are mounted and in which a temperature drop in a pressure vessel that contains the electrically driven compressor is prevented, refrigeration oil is prevented from being discharged from the pressure vessel of the electrically driven compressor, and the electrically driven compressor has high operational reliability.

In one general aspect, the techniques disclosed here feature an outdoor unit for an air conditioner including an engine, a non-electrically driven compressor driven by the engine, an electrically driven compressor that is connected in parallel to the non-electrically driven compressor and that is driven by electric power, and an outdoor heat exchanger. The electrically driven compressor is driven earlier than the engine and the non-electrically driven compressor in a defrosting operation in which the outdoor heat exchanger is defrosted.

Accordingly, when the defrosting operation is started, the electrically driven compressor is activated first from the state in which the engine, the non-electrically driven compressor, and the electrically driven compressor are stopped. Since the time in which the electrically driven compressor is stopped is short, a temperature drop in the pressure vessel that contains the electrically driven compressor due to the influence of the outside air temperature can be prevented, and the discharged refrigerant is not cooled and condensed in the pressure vessel. Accordingly, refrigeration oil in the pressure vessel of the electrically driven compressor is not discharged together with the liquid refrigerant. The pressure vessel of the non-electrically driven compressor, which is stopped for a long time, is maintained at a high temperature due to heat radiated from the engine. Therefore, the refrigerant discharged from the non-electrically driven compressor, which is driven later, is not cooled and condensed in the pressure vessel. Accordingly, refrigeration oil in the pressure vessel of the non-electrically driven compressor is not discharged together with the liquid refrigerant.

Since the electrically driven compressor is activated before the temperature in the pressure vessel that contains the electrically driven compressor decreases, the heat of the refrigerant that has been compressed and increased in temperature is not used to heat the pressure vessel that contains the electrically driven compressor, and a large amount of heat is continuously supplied to the refrigerant that enters the electrically driven compressor.

In addition, since the electrically driven compressor is driven earlier than the non-electrically driven compressor, there is no pressure difference between the inlet and outlet of the electrically driven compressor when the electrically driven compressor is driven.

The present disclosure provides an outdoor unit for an air conditioner in which a temperature drop in a pressure vessel that contains the electrically driven compressor is prevented, refrigeration oil is prevented from being discharged from the pressure vessel of the electrically driven compressor, and the electrically driven compressor has high operational reliability.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE DRAWINGS

Fig. 1 is a refrigeration cycle diagram of an air conditioner according to an embodiment of the present disclosure;
Fig. 2 is a vertical sectional view of an outdoor unit for the air conditioner according to the embodiment of the present disclosure taken along a vertical plane that is parallel to a front surface of the outdoor unit;
Fig. 3 is a refrigeration cycle diagram of an air conditioner according to Patent Document 1; and
Fig. 4 is a refrigeration cycle diagram of an air conditioner according to Patent Document 2.

### DETAILED DESCRIPTION

An outdoor unit for an air conditioner according to the invention is defined in claim 1. It includes an engine; a first compressor that is driven by the engine; a second compressor that is connected in parallel to the first compressor and that is driven by electric power; an outdoor heat exchanger; and a controller. The controller causes the second compressor to be driven earlier than the engine and the first compressor in a defrosting operation in which the outdoor heat exchanger is defrosted.

Accordingly, when the defrosting operation is started, the second compressor, which is an electrically driven compressor, is activated first from the state in which the engine, the first compressor, which is a non-electrically driven compressor, and the second compressor have been stopped for 1 to 3 minutes. Since the time in which the second compressor is stopped is short, a temperature drop in the pressure vessel that contains the second compressor due to the influence of the outside air temperature can be prevented, and the discharged refrigerant is not cooled and condensed in the pressure vessel. Accordingly, refrigeration oil in the pressure vessel of the second compressor is not discharged together with the liquid refrigerant. The pressure vessel of the first compressor, which is stopped for a long time, is maintained at a high temperature due to heat radiated from the engine. Therefore, the refrigerant discharged from the first compressor, which is driven later, is not cooled and condensed in the pressure vessel. Accordingly, refrigeration oil in the pressure vessel of the first compressor is not discharged together with the liquid refrigerant.

Thus, according to the present disclosure, depletion of the refrigeration oil in the pressure vessels that contain the first and second compressors can be prevented in the defrosting operation, and the operational reliability of the first and second compressor can be increased.

Since the second compressor is activated before the temperature in the pressure vessel that contains the second compressor decreases, the heat of the refrigerant that has been compressed and increased in temperature is not used to heat the pressure vessel that contains the second compressor, and a large amount of heat is continuously supplied to the refrigerant that enters the second compressor. If the engine and the first compressor are activated first, the second compressor, which is activated later, is activated from the state in which a pressure difference is provided between the inlet and outlet thereof. Accordingly, the activation torque is higher than that in the case where the second compressor is activated from the state in which there is no pressure difference between the inlet and outlet thereof, and a larger amount of electric power is required. When the second compressor is activated first, there is no pressure difference between the inlet and outlet of the second compressor. Therefore, electric power consumed at the time of activation can be reduced.

Thus, according to the present disclosure, the outdoor heat exchanger can be quickly defrosted, so that the time required for the defrosting operation can be reduced and the power consumption can be reduced accordingly. In addition, an environment that makes the user feel cold and uncomfortable is not created.

Another expression of the outdoor unit for an air conditioner according to the first aspect may include a passage in which a refrigerant flows, the passage including a first portion (153) and branching into a first branching passage and a second branching passage at the first portion; an engine; a first compressor that is present in the first branching passage and that is driven by the engine; a second compressor that is present in the second branching passage and that is driven by electrical power; an outdoor heat exchanger that is present on the passage; and a controller. The controller may cause the second compressor to be driven earlier than the engine and the first compressor in a defrosting operation in which the outdoor heat exchanger is defrosted. Further, another expression of the outdoor unit for an air conditioner according to the first aspect may include a pipe in which a refrigerant flows, the pipe constituting passages including a first passage; a switching unit that is connected to the pipe; a controller that controls the switching unit to select one passage from the passages, the first passage including a first portion (153) and a second portion, the first passage branching into a first branching passage and a second branching passage at the first portion, the first branching passage and the second branching passage are combined with each other at the second portion; an engine; a first compressor that is present in the first branching passage and that is driven by the engine; a second compressor that is present in the second branching passage and that is driven by electrical power; a first outdoor heat exchanger that is present in the first branching passage; and a second outdoor heat exchanger that is present in the second branching passage. The first portion, the first compressor, the first heat exchanger, and the second portion may be present in this order in the first branching passage. The first portion, the second compressor, the second outdoor heat exchanger, and the second portion may be present in this order in the second branching passage. The switching unit may include a first switching unit and a second switching unit. The first switching unit may be present in the first branching passage between the first compressor and the first heat exchanger. The second switching unit may be present in the second branching passage between the second compressor and the second heat exchanger. When the first passage is selected by the switching unit, the controller may cause the second compressor to be driven earlier than the engine and the first compressor in a defrosting operation in which the outdoor heat exchanger is defrosted.

According to a second aspect, the outdoor unit according to the first aspect further includes a first switching unit that switches a direction in which a refrigerant discharged from the first compressor flows; a second switching unit that switches a direction in which the refrigerant discharged from the second compressor flows; a gas-pipe connection port; and a liquid-pipe connection port. The outdoor heat exchanger includes a first outdoor heat exchanger, a second outdoor heat exchanger, and a third outdoor heat exchanger. In the defrosting operation, the controller switches the first switching unit and the second switching unit so that the refrigerant flows through a discharge pipe of the first compressor, the first outdoor heat exchanger, the third outdoor heat exchanger, and a suction pipe of the first compressor, and so that the refrigerant flows through a discharge pipe of the second compressor, the second outdoor heat exchanger, the third outdoor heat exchanger, and a suction pipe of the second compressor.

Accordingly, when the defrosting operation is started, the second compressor, which is an electrically driven compressor, is activated first from the state in which the engine, the first compressor, which is a non-electrically driven compressor, and the second compressor have been stopped for 1 to 3 minutes. Since the time in which the second compressor is stopped is short, a temperature drop in the pressure vessel that contains the second compressor due to the influence of the outside air temperature can be prevented, and the discharged refrigerant is not cooled and condensed in the pressure vessel. Accordingly, refrigeration oil in the pressure vessel of the second compressor is not discharged together with the liquid refrigerant. The pressure vessel of the first compressor, which is stopped for a long time, is maintained at a high temperature due to heat radiated from the engine. Therefore, the refrigerant discharged from the first compressor, which is driven later, is not cooled and condensed in the pressure vessel. Accordingly, refrigeration oil in the pressure vessel of the first compressor is not discharged together with the liquid refrigerant.

According to a third aspect, in the outdoor unit according to the first or second aspect, the controller activates the engine and the first compressor before a rotational speed of the second compressor reaches a target rotational speed for the defrosting operation.

In this case, a large amount of refrigerant that has been reduced in temperature and pressure does not flow into the first outdoor heat exchanger, which is to be defrosted, when the first compressor is activated and the first outdoor-unit decompressor is opened.

According to a fourth aspect, in the outdoor unit according to any one of the first to third aspects, the controller starts to gradually open the first outdoor-unit decompressor at a time when the first compressor is activated.

Also in this case, a large amount of refrigerant that has been reduced in temperature and pressure does not flow into the first outdoor heat exchanger, which is to be defrosted, when the first compressor is activated and the first outdoor-unit decompressor is opened.

An embodiment of the present disclosure will be described with reference to the drawings. The present disclosure is not limited by the embodiment.

### Embodiment

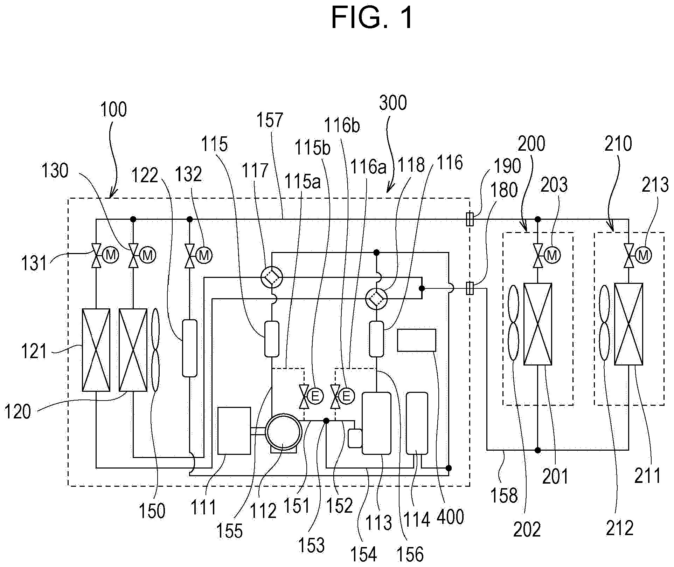

Fig. 1 illustrates the configuration of a refrigeration cycle of an air conditioner according to the embodiment. The air conditioner illustrated in Fig. 1 has a so-called twin structure in which two indoor units are connected to a single outdoor unit. The configuration of the refrigeration cycle is not limited to that illustrated in Fig. 1. For example, two or more outdoor units and three or more indoor units may be connected in parallel.

The air conditioner 300 according to the present embodiment includes an outdoor unit 100, indoor units 200 and 210, and a controller 400.

The outdoor unit 100 includes an engine 111 that is driven by gas, a first compressor 112 that receives driving force from the engine 111 and compresses refrigerant, and a second compressor 113 that is driven by electric power supplied from, for example, a commercial power supply. The displacement volume of the first compressor 112 is greater than that of the second compressor 113. The first compressor 112 and the second compressor 113 use the same refrigeration oil as lubricant.

A first-compressor suction pipe 151 is connected to the first compressor 112. A second-compressor suction pipe 152 is connected to the second compressor 113. A suction pipe 154 is connected to a combining point 153 at which the first-compressor suction pipe 151 and the second-compressor suction pipe 152 are combined. An accumulator 114 is provided in the suction pipe 154. The accumulator 114 supplies gas refrigerant to the first compressor 112 and the second compressor 113. One end of the suction pipe 154 is connected to the combining point 153, and the other end of the suction pipe 154 is connected to a gas pipe 158 through the accumulator 114.

A first-compressor discharge pipe 155 is connected to the first compressor 112. A first-compressor oil separator 115 is provided in the first-compressor discharge pipe 155. The first-compressor oil separator 115 separates refrigeration oil from gas discharged from the first compressor 112.

The refrigeration oil separated by the first-compressor oil separator 115 is returned to the first-compressor suction pipe 151 through a first-compressor oil return pipe 115a. The flow through the first-compressor oil return pipe 115a is controlled by opening and closing an on-off valve 115b for the first-compressor oil return pipe 115a.

A second-compressor discharge pipe 156 is connected to the second compressor 113. A second-compressor oil separator 116 is provided in the second-compressor discharge pipe 156. The second-compressor oil separator 116 separates refrigeration oil from gas discharged from the second compressor 113.

The refrigeration oil separated by the second-compressor oil separator 116 is returned to the second-compressor suction pipe 152 through a second-compressor oil return pipe 116a. The flow through the second-compressor oil return pipe 116a is controlled by opening and closing an on-off valve 116b for the second-compressor oil return pipe 116a.

The first-compressor oil return pipe 115a and the second-compressor oil return pipe 116a may be combined together so that the refrigeration oil separated by the first-compressor oil separator 115 and the refrigeration oil separated by the second-compressor oil separator 116 are returned to the first compressor 112 and the second compressor 113 together. In this case, the combined refrigeration oil is returned to a point between the accumulator 114 and the combining point 153.

The first-compressor discharge pipe 155 is connected to a first outdoor heat exchanger 120, which serves as an outdoor heat exchanger, through the first-compressor oil separator 115 and a first switching unit 117. The first switching unit 117 is a four-way valve that switches the path along which the refrigerant discharged from the first compressor 112 flows between a path for a cooling operation and a path for a heating operation.

The second-compressor discharge pipe 156 is connected to a second outdoor heat exchanger 121, which also serves as an outdoor heat exchanger, through the second-compressor oil separator 116 and a second switching unit 118. The second switching unit 118 is a four-way valve that switches the path along which the refrigerant discharged from the second compressor 113 flows between a path for the cooling operation and a path for the heating operation.

In Fig. 1, the refrigerant flows along the paths shown by the solid lines in the cooling operation, and along the paths shown by the dotted lines in the heating operation.

One end of the first outdoor heat exchanger 120 is connected to the first switching unit 117. The other end of the first outdoor heat exchanger 120 is connected to a liquid pipe 157 through a first outdoor-unit decompressor 130, which decompresses and expands the refrigerant.

One end of the second outdoor heat exchanger 121 is connected to the second switching unit 118. The other end of the second outdoor heat exchanger 121 is connected to the liquid pipe 157 through a second outdoor-unit decompressor 131, which decompresses and expands the refrigerant.

The first outdoor heat exchanger 120 and the second outdoor heat exchanger 121 are, for example, fin-and-tube heat exchangers or microtube heat exchangers. Outdoor blower fans 150 are disposed near the first outdoor heat exchanger 120 and the second outdoor heat exchanger 121. The outdoor blower fans 150 supply the air around the outdoor unit 100 to the first outdoor heat exchanger 120 and the second outdoor heat exchanger 121, so that heat exchange occurs between the air and the refrigerant that flows through the tubes of the first outdoor heat exchanger 120 and the second outdoor heat exchanger 121.

The outdoor unit 100 includes two pipe connection ports. One of the pipe connection ports is a liquid-pipe connection port 190 that is connected to the liquid pipe 157 through which liquid refrigerant mainly flows. The other pipe connection port is a gas-pipe connection port 180 that is connected to the gas pipe 158 through which gas refrigerant mainly flows.

The outdoor unit 100 also includes an engine waste heat exchanger 122, which serves as a third outdoor heat exchanger. The engine waste heat exchanger 122 is connected to the liquid pipe 157 through a refrigerant flow-regulating valve 132 for the engine waste heat exchanger 122.

The engine waste heat exchanger 122 transfers heat between high-temperature cooling water that has been used to cool the engine 111 and the refrigerant, and is used in the heating operation. The engine waste heat exchanger 122 may be, for example, a plate-type heat exchanger.

The refrigerant flow-regulating valve 132 for the engine waste heat exchanger 122 adjust the flow rate of the refrigerant that flows into the engine waste heat exchanger 122.

The indoor unit 200 includes an indoor heat exchanger 201, an indoor blower fan 202 that supplies the air around the indoor unit 200 to the indoor heat exchanger 201, and an indoor-unit decompressor 203 that decompresses and expands the refrigerant.

The liquid pipe 157 is connected to one end of the indoor heat exchanger 201 through the indoor-unit decompressor 203. The other end of the indoor heat exchanger 201 is connected to the gas pipe 158.

The indoor unit 210 includes an indoor heat exchanger 211, an indoor blower fan 212 that supplies the air around the indoor unit 210 to the indoor heat exchanger 211, and an indoor-unit decompressor 213 that decompresses and expands the refrigerant.

The liquid pipe 157 is connected to one end of the indoor heat exchanger 211 through the indoor-unit decompressor 213. The other end of the indoor heat exchanger 211 is connected to the gas pipe 158.

The gas pipe 158 extends into the outdoor unit 100 through the gas-pipe connection port 180 and branches into two passages so as to be connected to the accumulator 114 through the first switching unit 117 and the second switching unit 118.

As described above, one end of the suction pipe 154 is connected to the combining point 153, and the other end of the suction pipe 154 is connected to the accumulator 114.

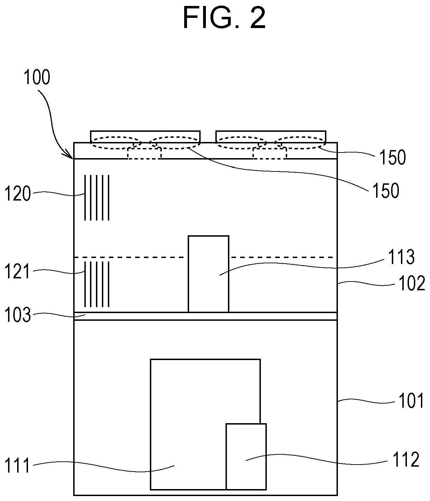

Fig. 2 illustrates the inner structure of the outdoor unit 100 of the air conditioner 300 according to the present embodiment.

Fig. 2 is a vertical sectional view taken along a vertical plane that is parallel to a front surface of the outdoor unit 100. As illustrated in Fig. 2, the outdoor unit 100 is divided into upper and lower sections by a partitioning plate 103. A machine chamber 101 is disposed in the lower section of the outdoor unit 100. A heat exchanger chamber 102 is disposed in the upper section of the outdoor unit 100.

The outdoor unit 100 is a so-called top-blown outdoor unit. When the outdoor blower fans 150, which are disposed in the upper section of the unit, are rotated, the pressure in the outdoor unit 100 is reduced to a negative pressure, so that the ambient air of the outdoor unit 100 is introduced into the outdoor unit 100 through the first outdoor heat exchanger 120 and the second outdoor heat exchanger 121. The air is subjected to heat exchange by the first and second heat exchangers 120 and 121, and is then blown upward by the outdoor blower fans 150.

As illustrated in Fig. 2, the first outdoor heat exchanger 120 has an opening area larger than that of the second outdoor heat exchanger 121, and is closer to the outdoor blower fans 150 than the second outdoor heat exchanger 121 is. In general, when a heat exchanger is disposed on a side surface of a top-blown outdoor unit, the flow velocity of the air that passes through the heat exchanger increases toward the top, that is, as the distance to the fan decreases. Accordingly, the heat exchange performance per unit area of the first outdoor heat exchanger 120 is higher than that of the second outdoor heat exchanger 121.

The engine 111 and the first compressor 112 are disposed in the machine chamber 101. The rotational driving force of the engine 111 is transmitted to the first compressor 112 through the power transmission belt (not shown).

Although not illustrated in Fig. 2, the machine chamber 101 also includes many components including the accumulator 114, the first-compressor oil separator 115, the second-compressor oil separator 116, the first switching unit 117, the second switching unit 118, the first outdoor-unit decompressor 130, the second outdoor-unit decompressor 131, the engine waste heat exchanger 122, the refrigerant flow-regulating valve 132 for the engine waste heat exchanger 122, an exhaust muffler of the engine 111, a cooling water pump that circulates cooling water in the engine 111, a control board, and refrigerant pipes.

In the heat exchanger chamber 102, the first outdoor heat exchanger 120 and the second outdoor heat exchanger 121 are arranged so as to form an outer wall of the heat exchanger chamber 102, and the second compressor 113 is disposed substantially at the center of the partitioning plate 103.

As illustrated in Fig. 2, the distance between the engine 111 and the first compressor 112 is smaller than the distance between the engine 111 and the second compressor 113.

Although the second compressor 113 is disposed in the heat exchanger chamber 102 in the present embodiment, the second compressor 113 may instead be disposed in the machine chamber 101.

The operation of the outdoor unit 100 and the indoor units 200 and 210 will now be described.

In the cooling operation, the controller 400 sets the first switching unit 117 and the second switching unit 118 so that the refrigerant flows along the paths shown by the solid lines (see Fig. 1). The refrigerant flow-regulating valve 132 for the engine waste heat exchanger 122 is closed so that the refrigerant does not flow through the engine waste heat exchanger 122.

High-temperature high-pressure refrigerant compressed by the first compressor 112 flows into the first-compressor oil separator 115. High-purity gas refrigerant from which the refrigeration oil is separated by the first-compressor oil separator 115 passes through the first switching unit 117 and enters the first outdoor heat exchanger 120. The gas refrigerant dissipates heat by exchanging heat with the outside air in the first outdoor heat exchanger 120, and is then condensed into high-pressure liquid refrigerant. The high-pressure liquid refrigerant passes through the first outdoor-unit decompressor 130, is combined with the refrigerant that has passed through the second outdoor-unit decompressor 131, and is supplied to the indoor units 200 and 210.

High-temperature high-pressure refrigerant compressed by the second compressor 113 flows into the second-compressor oil separator 116. High-purity gas refrigerant from which the refrigeration oil is separated by the second-compressor oil separator 116 passes through the second switching unit 118 and enters the second outdoor heat exchanger 121. The gas refrigerant dissipates heat by exchanging heat with the outside air in the second outdoor heat exchanger 121, and is then condensed into high-pressure liquid refrigerant. The high-pressure liquid refrigerant passes through the second outdoor-unit decompressor 131, is combined with the refrigerant that has passed through the first outdoor-unit decompressor 130, and is supplied to the indoor units 200 and 210.

When the first compressor 112 and the second compressor 113 are simultaneously driven and the flow rate of the refrigerant discharged by the second compressor 113 is considerably lower than that of the refrigerant discharged by the first compressor 112, the second outdoor-unit decompressor 131 may be fully opened and the opening degree of the first outdoor-unit decompressor 130 may be reduced. Thus, the discharge pressure of the second compressor 113 is maintained lower than that of the first compressor 112. In other words, the discharge pressure of the second compressor 113 is prevented from being increased to that of the first compressor 112.

The first outdoor-unit decompressor 130 is controlled, for example, as follows. First, the discharge pressure of the first compressor 112 and the refrigerant temperature at a position between the first outdoor heat exchanger 120 and the first outdoor-unit decompressor 130 (outlet temperature of the first outdoor heat exchanger 120) are measured. Then, the difference between the refrigerant condensing temperature of the first outdoor heat exchanger 120, which is calculated from the discharge pressure of the first compressor 112, and the outlet temperature of the first outdoor heat exchanger 120, is calculated. In other words, the supercooling degree of the refrigerant that flows out of the first outdoor heat exchanger 120 is calculated. The first outdoor-unit decompressor 130 is controlled so that the supercooling degree becomes equal to a predetermined value.

When the first compressor 112 is being driven, the on-off valve 115b for the first-compressor oil return pipe 115a is opened so that the refrigeration oil separated by the first-compressor oil separator 115 is returned to the suction pipe of the first compressor 112 through the first-compressor oil return pipe 115a. When the first compressor 112 is not driven, the on-off valve 115b for the first-compressor oil return pipe 115a is closed.

When the second compressor 113 is being driven, the on-off valve 116b for the second-compressor oil return pipe 116a is opened so that the refrigeration oil separated by the second-compressor oil separator 116 is returned to the second-compressor suction pipe 152 through the second-compressor oil return pipe 116a. When the second compressor 113 is not driven, the on-off valve 116b for the second-compressor oil return pipe 116a is closed.

The high-pressure liquid refrigerant that has entered the indoor unit 200 is decompressed by the indoor-unit decompressor 203 to become gas-liquid two-phase refrigerant, and flows into the indoor heat exchanger 201. The gas-liquid two-phase refrigerant absorbs heat by exchanging heat with the air in the space to be air-conditioned in the indoor heat exchanger 201, and evaporates into gas refrigerant, which flows out of the indoor unit 200.

Similar to the indoor unit 200, also in the indoor unit 210, the high-pressure liquid refrigerant is decompressed by the indoor-unit decompressor 213 to become gas-liquid two-phase refrigerant, and flows into the indoor heat exchanger 211. The gas-liquid two-phase refrigerant absorbs heat by exchanging heat with the air in the space to be air-conditioned in the indoor heat exchanger 211, and evaporates into gas refrigerant, which flows out of the indoor unit 210.

When the cooling operation is performed only by the indoor unit 200, the indoor-unit decompressor 213 is closed and the refrigerant is not supplied to the indoor heat exchanger 211 of the indoor unit 210. When the cooling operation is performed only by the indoor unit 210, the indoor-unit decompressor 203 is closed and the refrigerant is not supplied to the indoor heat exchanger 201 of the indoor unit 200.

The gas refrigerant that flows out of the indoor units 200 and 210 returns to the outdoor unit 100. The gas refrigerant that flows into the outdoor unit 100 is divided into gas refrigerant that flows through the first switching unit 117 and gas refrigerant that flows through the second switching unit 118 in the outdoor unit 100. The gas refrigerant that has flowed through the first switching unit 117 and the gas refrigerant that has flowed through the second switching unit 118 are combined together. The combined refrigerant passes through the accumulator 114 and returns to the first compressor 112 and the second compressor 113.

The operation of the first compressor 112 and the second compressor 113 in the cooling operation will now be described.

In the case where the cooling load is smaller than the cooling capacity obtained when the first compressor 112 is operated at the lowest operation frequency thereof (minimum cooling capacity of the first compressor 112), intermittent operation will be performed if only the first compressor 112 is operated. Therefore, only the second compressor 113 is operated.

In the case where the cooling load is greater than the minimum cooling capacity of the first compressor 112 and smaller than the cooling capacity obtained when the first compressor 112 and the second compressor 113 are both operated at the lowest operation frequencies thereof (minimum cooling capacity of the first and second compressors 112 and 113), one of the first compressor 112 and second compressor 113 that has, for example, lower operation cost or energy consumption, is selectively operated.

In the case where the cooling load is greater than the minimum cooling capacity of the first and second compressors 112 and 113, the first compressor 112 and the second compressor 113 are both operated so that operation cost or energy consumption, for example, is minimized. In this case, the relationship of the operation frequency of each of the first and second compressors 112 and 113 with the operation cost or energy consumption is used to determine the operation frequency of each of the first and second compressors 112 and 113 at which the operation cost or energy consumption is minimized.

In practice, the ratio of the cooling load allocated to the first compressor 112 to the entire cooling load is about ±15% of the ratio of the cooling capacity obtained when only the first compressor 112 is operated at the maximum operation frequency thereof to the maximum cooling capacity obtained when the first and second compressors 112 and 113 are both operated at the maximum operation frequencies thereof (maximum cooling capacity of the first and second compressors 112 and 113).

In the heating operation, the controller 400 sets the first switching unit 117 and the second switching unit 118 so that the refrigerant flows along the paths shown by the dotted lines (see Fig. 1).

High-temperature high-pressure refrigerant compressed by the first compressor 112 flows into the first-compressor oil separator 115. High-purity gas refrigerant from which the refrigeration oil is separated by the first-compressor oil separator 115 passes through the first switching unit 117, is combined with the refrigerant that has passed through the second switching unit 118, and is supplied to the indoor units 200 and 210.

High-temperature high-pressure refrigerant compressed by the second compressor 113 flows into the second-compressor oil separator 116. High-purity gas refrigerant from which the refrigeration oil is separated by the second-compressor oil separator 116 passes through the second switching unit 118, is combined with the refrigerant that has passed through the first switching unit 117, and is supplied to the indoor units 200 and 210.

The high-temperature high-pressure gas refrigerant that has entered the indoor unit 200 flows into the indoor heat exchanger 201. The high-temperature high-pressure gas refrigerant dissipates heat by exchanging heat with the air in the space to be air-conditioned in the indoor heat exchanger 201, and is condensed into high-pressure liquid refrigerant, which passes through the indoor-unit decompressor 203 and flows out of the indoor unit 200.

Similar to the indoor unit 210, also in the indoor unit 200, the high-temperature high-pressure gas refrigerant flows into the indoor heat exchanger 211. The high-temperature high-pressure gas refrigerant dissipates heat by exchanging heat with the air in the space to be air-conditioned in the indoor heat exchanger 211, and is then condensed into high-pressure liquid refrigerant, which passes through the indoor-unit decompressor 213 and flows out of the indoor unit 210.

Similar to the cooling operation, when the heating operation is performed only by the indoor unit 200, the indoor-unit decompressor 213 is closed and the refrigerant is not supplied to the indoor heat exchanger 211 of the indoor unit 210. When the heating operation is performed only by the indoor unit 210, the indoor-unit decompressor 203 is closed and the refrigerant is not supplied to the indoor heat exchanger 201 of the indoor unit 200.

The high-pressure liquid refrigerant that has flowed out of the indoor units 200 and 210 returns to the outdoor unit 100. The high-pressure liquid refrigerant that has flowed into the outdoor unit 100 branches in front of the first outdoor-unit decompressor 130, the second outdoor-unit decompressor 131, and the refrigerant flow-regulating valve 132 for the engine waste heat exchanger 122, and is decompressed by the first outdoor-unit decompressor 130, the second outdoor-unit decompressor 131, and the refrigerant flow-regulating valve 132 for the engine waste heat exchanger 122 to become gas-liquid two-phase refrigerant, which flows into the first outdoor heat exchanger 120, the second outdoor heat exchanger 121, and the engine waste heat exchanger 122.

The flow rate of the refrigerant that flows into each of the first outdoor heat exchanger 120, the second outdoor heat exchanger 121, and the engine waste heat exchanger 122 is controlled by controlling the opening degree of each of the first outdoor-unit decompressor 130, the second outdoor-unit decompressor 131, and the refrigerant flow-regulating valve 132 for the engine waste heat exchanger 122. The opening degree of the first outdoor-unit decompressor 130 is controlled so that the difference between the temperatures detected at locations upstream and downstream of the first outdoor heat exchanger 120 approaches a predetermined value. The opening degrees of the second outdoor-unit decompressor 131 and the refrigerant flow-regulating valve 132 for the engine waste heat exchanger 122 are similarly controlled.

The gas-liquid two-phase refrigerant that has flowed into the first outdoor heat exchanger 120 and the second outdoor heat exchanger 121 absorbs heat by exchanging heat with the outside air and evaporates. The refrigerant that has evaporated in the first outdoor heat exchanger 120 passes through the first switching unit 117, and is combined with gas refrigerant that has evaporated in the second outdoor heat exchanger 121 and passed through the second switching unit 118.

The gas-liquid two-phase refrigerant that has flowed into the engine waste heat exchanger 122 absorbs heat by exchanging heat with high-temperature cooling water used to cool the engine 111, and evaporates. The gas refrigerant discharged from the engine waste heat exchanger 122 is combined with the gas refrigerant that has flowed out of the first switching unit 117 and the second switching unit 118, and flows into the accumulator 114. The gas refrigerant that has flowed out of the accumulator 114 returns to the first compressor 112 and the second compressor 113.

The operation of the first compressor 112 and the second compressor 113 in the heating operation will now be described.

In the case where the heating load is smaller than the heating capacity obtained when the first compressor 112 is operated at the lowest operation frequency thereof (minimum heating capacity of the first compressor 112), intermittent operation will be performed if only the first compressor 112 is operated. Therefore, only the second compressor 113 is operated.

In the case where the heating load is greater than the minimum heating capacity of the first compressor 112 and smaller than the heating capacity obtained when the first compressor 112 and the second compressor 113 are both operated at the lowest operation frequencies thereof (minimum heating capacity of the first and second compressors 112 and 113), one of the first compressor 112 and second compressor 113 that has, for example, lower operation cost or energy consumption, is selectively operated.

In the case where the heating load is greater than the minimum heating capacity of the first and second compressors 112 and 113, the first compressor 112 and the second compressor 113 are both operated so that operation cost or energy consumption, for example, is minimized. In this case, the relationship of the operation frequency of each of the first and second compressors 112 and 113 with the operation cost or energy consumption is used to determine the operation frequency of each of the first and second compressors 112 and 113 at which the operation cost or energy consumption is minimized.

In practice, the ratio of the heating load allocated to the first compressor 112 to the entire heating load is about ±15% of the ratio of the heating capacity obtained when only the first compressor 112 is operated at the maximum operation frequency thereof to the maximum heating capacity obtained when the first and second compressors 112 and 113 are both operated at the maximum operation frequencies thereof (maximum heating capacity of the first and second compressors 112 and 113).

During the heating operation, frost conditions of the first outdoor heat exchanger 120 and the second outdoor heat exchanger 121 are constantly monitored. When it is determined that the first outdoor heat exchanger 120 and the second outdoor heat exchanger 121 are frosted, the controller 400 switches the operation to a defrosting operation.

When the defrosting operation is started, the engine 111, the first compressor 112, and the second compressor 113 are stopped. When the refrigerant becomes somewhat stable after 30 seconds to 2 minutes from the stoppage of the first compressor 112 and the second compressor 113, the first switching unit 117 and the second switching unit 118 are switched so that the refrigerant flows along the paths shown by the solid lines. At this time, the first outdoor-unit decompressor 130 is fully closed and the second outdoor-unit decompressor 131 is fully opened. In addition, the refrigerant flow-regulating valve 132 for the engine waste heat exchanger 122 is opened and the indoor-unit decompressors 203 and 213 are fully closed.

Then, the second compressor 113, which is electrically driven, is activated. The refrigerant discharged from the second compressor 113 passes through the second switching unit 118, enters the second outdoor heat exchanger 121, and starts to defrost the second outdoor heat exchanger 121. The refrigerant supplies heat to the frost on the second outdoor heat exchanger 121, and is cooled and liquefied to become low-temperature refrigerant. The low-temperature refrigerant passes through the second outdoor-unit decompressor 131, which is fully open, and enters the refrigerant flow-regulating valve 132 for the engine waste heat exchanger 122, where the low-temperature refrigerant is decompressed to become gas-liquid two-phase refrigerant. The gas-liquid two-phase refrigerant flows into the engine waste heat exchanger 122.

When, for example, the second compressor 113 is stopped for a long time in an environment where the outside air temperature is very low, the temperature in the pressure vessel that contains the second compressor 113 decreases due to the influence of the outside air temperature. Accordingly, the refrigerant discharged from the second compressor 113 is instantly cooled, condensed, and liquefied in the pressure vessel that contains the second compressor 113. As a result, refrigeration oil is discharged from the pressure vessel of the second compressor 113 together with the liquid refrigerant. Thus, there is a problem that, when the defrosting operation is started, the refrigeration oil will be depleted and the operational reliability of the second compressor 113 will be reduced.

In the present embodiment, since the time in which the second compressor 113 is stopped is short, the operational reliability of the second compressor 113 is increased.

The gas-liquid two-phase refrigerant that has flowed into the engine waste heat exchanger 122 absorbs heat by exchanging heat with the high-temperature cooling water used to cool the engine 111, and evaporates. The gas refrigerant discharged from the engine waste heat exchanger 122 flows into the accumulator 114. The gas refrigerant that has flowed out of the accumulator 114 returns to the second compressor 113. Although the engine 111 is not driven, since the engine has a large thermal capacity, the refrigerant absorbs heat from the cooling water that is maintained at a high temperature due to the thermal capacity of the engine until the engine 111 is driven.

After the defrosting operation is started, the rotational speed of the second compressor 113 gradually increases. Since the first compressor 112, which is stopped, is disposed near the engine 111, the pressure vessel that contains the first compressor 112 receives heat from the engine 111 and the temperature thereof is maintained. Therefore, when the first compressor 112 is activated, the refrigerant discharged from the first compressor 112 is not instantaneously cooled and condensed in the pressure vessel that contains the first compressor 112 and is not discharged together with the refrigeration oil in the pressure vessel.

The first compressor 112 is preferably activated before the discharge pressure of the second compressor 113 increases, more specifically, before the rotational speed of the second compressor 113 reaches a target rotational speed for the defrosting operation. When the first compressor 112 is activated, the first outdoor-unit decompressor 130 is gradually opened.

When only the second compressor 113 is operated in the defrosting operation, there is a pressure difference between the discharge side of the second compressor 113 (discharge port of the second compressor 113, the second-compressor oil separator 116, the second outdoor heat exchanger 121, the second outdoor-unit decompressor 131, and the refrigerant flow-regulating valve 132 for the engine waste heat exchanger 122) and the suction side of the second compressor 113 (refrigerant flow-regulating valve 132 for the engine waste heat exchanger 122, the engine waste heat exchanger 122, the accumulator 114, and the suction port of the second compressor 113).

In addition, the pressure at the discharge side of the first compressor 112 (discharge port of the first compressor 112, the first-compressor oil separator 115, the first outdoor heat exchanger 120, and the first outdoor-unit decompressor 130) is maintained low because the first outdoor heat exchanger 120 serves as an evaporator in the heating operation.

If the rotational speed of the second compressor 113 reaches the target rotational speed for the defrosting operation before the first compressor 112 is activated, a large pressure difference is generated across the first outdoor-unit decompressor 130. Accordingly, when the first compressor 112 is activated and the first outdoor-unit decompressor 130 is opened, a large amount of refrigerant that has been reduced in temperature and pressure flows into the first outdoor heat exchanger 120, which is to be defrosted. Therefore, the engine 111 and the first compressor 112 are preferably activated before the rotational speed of the second compressor 113 reaches the target rotational speed for the defrosting operation.

When the first compressor 112 is activated, the refrigerant discharged from the first compressor 112 starts to defrost the first outdoor heat exchanger 120. The refrigerant supplies heat to the frost on the first outdoor heat exchanger 120, and is cooled and liquefied to become low-temperature refrigerant. The low-temperature refrigerant passes through the first outdoor-unit decompressor 130, is combined with the liquid refrigerant that has been flowed out of the second outdoor-unit decompressor 131, and enters the refrigerant flow-regulating valve 132 for the engine waste heat exchanger 122, where the refrigerant is decompressed to become gas-liquid two-phase refrigerant. The gas-liquid two-phase refrigerant flows into the engine waste heat exchanger 122.

The gas-liquid two-phase refrigerant that has flowed into the engine waste heat exchanger 122 absorbs heat by exchanging heat with the high-temperature cooling water used to cool the engine 111, and evaporates. The gas refrigerant discharged from the engine waste heat exchanger 122 flows into the accumulator 114. The gas refrigerant that has flowed out of the accumulator 114 returns to the first compressor 112 and the second compressor 113.

As is clear from the above description, in the present embodiment, when the first compressor 112 is activated in the defrosting operation, the pressure vessel of the first compressor 112 is maintained at a high temperature due to heat radiated from the engine 111. When the first compressor 112 is activated in this state, the refrigerant discharged from the first compressor 112 is not cooled and condensed in the pressure vessel. In other words, the refrigeration oil in the pressure vessel that contains the first compressor 112 is not discharged together with the liquid refrigerant.

Thus, according to the present disclosure, depletion of the refrigeration oil in the pressure vessel that contains the first compressor 112 can be prevented in the defrosting operation, and the operational reliability of the first compressor 112 can be increased.

Since the second compressor 113 is activated before the temperature in the pressure vessel that contains the second compressor 113 decreases, the heat of the refrigerant that has been compressed and increased in temperature is not used to heat the pressure vessel that contains the second compressor 113, and a large amount of heat is continuously supplied to the refrigerant that enters the second compressor 113.

If the engine 111 and the first compressor 112 are activated first, the second compressor 113, which is activated later, is activated from the state in which a pressure difference is provided between the inlet and outlet thereof. Accordingly, the activation torque is higher than that in the case where the second compressor 113 is activated from the state in which there is no pressure difference between the inlet and outlet thereof, and a larger amount of electric power is required. When the second compressor 113 is activated first, there is no pressure difference between the inlet and outlet of the second compressor 113. Therefore, electric power consumed at the time of activation can be reduced.

Thus, according to the present disclosure, the outdoor heat exchanger can be quickly defrosted, so that the time required for the defrosting operation can be reduced and the power consumption can be reduced accordingly. In addition, an environment that makes the user feel cold and uncomfortable is not created.

The present disclosure can be appropriately applied to an air conditioner that operates with high reliability in a defrosting operation.

## Claims

1. An outdoor unit (100) for an air conditioner (300), comprising:
an engine (111);
a first compressor (112) that is driven by the engine (111);
a second compressor (113) that is connected in parallel to the first compressor (112) and that is driven by electric power;
an outdoor heat exchanger; and
a controller (400), **characterized in that**
the controller (400) causes the second compressor (113) to be driven earlier than the engine (111) and the first compressor (112) in a defrosting operation in which the outdoor heat exchanger is defrosted.

2. The outdoor unit (100) according to claim 1, further comprising:
a first switching unit (117) that switches a direction in which a refrigerant discharged from the first compressor (112) flows;
a second switching unit (118) that switches a direction in which the refrigerant discharged from the second compressor (113) flows;
a gas-pipe connection port (180); and
a liquid-pipe connection port (190), wherein
the outdoor heat exchanger includes a first outdoor heat exchanger (120), a second outdoor heat exchanger (121), and a third outdoor heat exchanger (122), and
in the defrosting operation, the controller (400) switches the first switching unit (117) and the second switching unit (118) so that the refrigerant flows through a discharge pipe (155) of the first compressor (112), the first outdoor heat exchanger (120), the third outdoor heat exchanger (122), and a suction pipe (151) of the first compressor (112), and so that the refrigerant flows through a discharge pipe (156) of the second compressor (113), the second outdoor heat exchanger (121), the third outdoor heat exchanger (122), and a suction pipe (152) of the second compressor (113).

3. The outdoor unit (100) according to claim 1 or 2, wherein the controller (400) activates the engine (111) and the first compressor (112) before a rotational speed of the second compressor (113) reaches a target rotational speed for the defrosting operation.

4. The outdoor unit (100) according to any one of claims 1 to 3, wherein the controller (400) starts to gradually open the first outdoor-unit decompressor at a time when the first compressor (112) is activated.

## Patentansprüche

1. Außeneinheit (100) für eine Klimaanlage (300), umfassend:
einen Motor (111);
einen ersten Verdichter (112), der von dem Motor (111) angetrieben wird;
einen zweiten Verdichter (113), der mit dem ersten Verdichter (112) parallelgeschaltet ist und durch elektrische Energie angetrieben wird;
einen Außenwärmetauscher; und
eine Steuerung (400), **dadurch gekennzeichnet, dass**
die Steuerung (400) bewirkt, dass der zweite Verdichter (113) bei einem Abtauvorgang, bei dem der Außenwärmetauscher abgetaut wird, früher als der Motor (111) und der erste Verdichter (112) angetrieben wird.

2. Außeneinheit (100) nach Anspruch 1, ferner umfassend:
eine erste Schalteinheit (117), die eine Richtung umschaltet, in die ein von dem ersten Verdichter (112) ausgestoßenes Kältemittel fließt;
eine zweite Schalteinheit (118), die eine Richtung umschaltet, in die das von dem zweiten Verdichter (113) ausgestoßene Kältemittel fließt;
einen Gasrohrverbindungsanschluss (180); und
einen Flüssigkeitsrohrverbindungsanschluss (190), wobei
der Außenwärmetauscher einen ersten Außenwärmetauscher (120), einen zweiten Außenwärmetauscher (121) und einen dritten Außenwärmetauscher (122) umfasst, und
die Steuerung (400) bei dem Abtauvorgang die erste Schalteinheit (117) und die zweite Schalteinheit (118) derart umschaltet, dass das Kältemittel durch eine Auslassleitung (155) des ersten Verdichters (112), den ersten Außenwärmetauscher (120), den dritten Außenwärmetauscher (122) und eine Ansaugleitung (151) des ersten Verdichters (112) fließt, und derart, dass das Kältemittel durch eine Auslassleitung (156) des zweiten Verdichters (113), den zweiten Außenwärmetauscher (121), den dritten Außenwärmetauscher (122) und eine Ansaugleitung (152) des zweiten Verdichters (113) fließt.

3. Außeneinheit (100) nach Anspruch 1 oder 2, wobei die Steuerung (400) den Motor (111) und den ersten Verdichter (112) in Gang setzt, bevor eine Drehzahl des zweiten Verdichters (113) eine Solldrehzahl für den Abtauvorgang erreicht.

4. Außeneinheit (100) nach einem der Ansprüche 1 bis 3, wobei die Steuerung (400) zu einem Zeitpunkt, an dem der erste Verdichter (112) in Gang gesetzt wird, beginnt, den ersten Außeneinheit-Dekompressor graduell zu öffnen.

## Revendications

1. Unité extérieure (100) pour un climatiseur d'air (300), comprenant :
un moteur (111) ;
un premier compresseur (112) entraîné par le moteur (111) ;
un deuxième compresseur (113) qui est relié en parallèle au premier compresseur (112) et qui est entraîné par l'énergie électrique ;
un échangeur de chaleur extérieur ; et
un dispositif de commande (400), **caractérisé en ce que**
le dispositif de commande (400) provoque l'entraînement du deuxième compresseur (113) plus tôt que celui du moteur (111) et du premier compresseur (112) dans un fonctionnement de dégivrage dans lequel l'échangeur de chaleur extérieur est dégivré.

2. Unité extérieure (100) selon la revendication 1, comprenant en outre :
une première unité de commutation (117) qui commute un sens dans lequel s'écoule un fluide frigorigène évacué par le premier compresseur (112) ;
une deuxième unité de commutation (118) qui commute un sens dans lequel s'écoule un fluide frigorigène évacué par le deuxième compresseur (113) ;
un orifice de raccordement de tuyau à gaz (180) ; et
un orifice de raccordement de tuyau à liquide (190),
l'échangeur de chaleur extérieur comprenant un premier échangeur de chaleur extérieur (120), un deuxième échangeur de chaleur extérieur (121) et un troisième échangeur de chaleur extérieur (122) et
dans le fonctionnement de dégivrage, le dispositif de commande (400) commutant la première unité de commutation (117) et la deuxième unité de commutation (118) de telle sorte que le fluide frigorigène s'écoule à travers un tuyau d'évacuation (155) du premier compresseur (112), le premier échangeur de chaleur extérieur (120), le troisième échangeur de chaleur extérieur (122) et un tuyau d'aspiration (151) du premier compresseur (112) et de telle sorte que le fluide frigorigène s'écoule à travers un tuyau d'évacuation (156) du deuxième compresseur (113), le deuxième échangeur de chaleur extérieur (121), le troisième échangeur de chaleur extérieur (122) et un tuyau d'aspiration (152) du deuxième compresseur (113).

3. Unité extérieure (100) selon la revendication 1 ou 2, le dispositif de commande (400) activant le moteur (111) et le premier compresseur (112) avant qu'une vitesse de rotation du deuxième compresseur (113) atteigne une vitesse de rotation cible pour le fonctionnement de dégivrage.

4. Unité extérieure (100) selon l'une quelconque des revendications 1 à 3, le dispositif de commande (400) commençant à ouvrir progressivement le premier décompresseur d'unité extérieure à un moment où le premier compresseur (112) est activé.
